# EUROPEAN PATENT SPECIFICATION

(11) **EP 3 864 355 B1**
(45) Date of publication and mention of the grant of the patent: **28.06.2023**
(21) Application number: 19900373.2
(22) Date of filing: 18.12.2019
(51) Int. Cl.: F25D 19/00, F25D 23/08

(54) **REFRIGERATOR**
KÜHLSCHRANK
RÉFRIGÉRATEUR

(30) Priority: 19.12.2018 KR 20180165592
(43) Date of publication of application: 18.08.2021
(73) Proprietor: Samsung Electronics Co., Ltd., Suwon-si, Gyeonggi-do 16677 (KR)
(72) Inventor: HWANG, In-Yong, Suwon-si Gyeonggi-do 16677 (KR); KOO, Dong-Won, Suwon-si Gyeonggi-do 16677 (KR); PARK, Sung Jin, Suwon-si Gyeonggi-do 16677 (KR); SHIN, Youn Tae, Suwon-si Gyeonggi-do 16677 (KR); LEE, Dong Hyun, Suwon-si Gyeonggi-do 16677 (KR)
(74) Representative: Gulde & Partner
(86) International application number: PCT/KR2019/017984
(87) International publication number: WO 2020/130618

(56) References cited:
- KR-A- 20030 027 367
- KR-B1- 101 811 146
- US-A1- 2005 056 041
- US-A1- 2005 217 301
- US-A1- 2011 146 054

## Description

The disclosure relates to a refrigerator, and more particularly to a refrigerator having an improved structure of a cool air supply system.

### [Background Art]

Generally, a refrigerator is an appliance that keeps food fresh by including a main body provided with a storage compartment therein and a cool air supply system for supplying cool air to the storage compartment. The storage compartment includes a refrigerating chamber that is maintained at temperature of about 0°C to 5°C to keep food refrigerated, and a freezing chamber that is maintained at temperature of about 0°C to -30°C to keep food frozen.

In the refrigerator, an insulating material is provided in a cabinet forming the storage compartment, and a machine room is positioned outside the cabinet. Among components constituting the cool air supply system, a compressor and a condenser are located in the machine room positioned outside the cabinet, an evaporator is located in the storage compartment positioned inside the cabinet, and a refrigerant pipe through which a refrigerant moves penetrates the insulating material.

Accordingly, when the cooling performance of the cool air supply system of the refrigerator is tested, the cooling performance test should be performed only after all components of the cool air supply system are installed in the cabinet. In addition, when the cool air supply system needs to be maintained and repaired, the cabinet should be disassembled.

US 20050217301 A1 and US 20050056041 A1 disclose a refrigerator including a detachable cooling module. Further relevant prior art documents are KR101811146B1, KR20030027367A and US2011/146054A1.

### [Disclosure]

### [Technical Problem]

It is an aspect of the disclosure to provide a refrigerator capable of easily maintaining a cool air supply system.

It is another aspect of the disclosure to provide a refrigerator capable of preventing a loss of cool air.

### [Technical Solution]

The present invention is disclosed in the independent claim 1. Further embodiments are disclosed in the dependent claims.

The cabinet sealing portion may include a recessed groove, the module sealing portion may include a protrusion protruding so as to be inserted into the cabinet sealing portion when the cooling module is inserted into the cabinet to be mounted to the cabinet, and the sealing member may be inserted into the cabinet sealing portion and pressed by the module sealing portion when the cooling module is inserted into the cabinet to be mounted to the cabinet.

A size of the cabinet sealing portion may be larger than a size of the module sealing portion.

The module sealing portion may include a recessed groove, the cabinet sealing portion may include a protrusion protruding so as to be inserted into the module sealing portion when the cooling module is inserted into the cabinet to be mounted to the cabinet, and the sealing member may be inserted into the module sealing portion and pressed by the cabinet sealing portion when the cooling module is inserted into the cabinet to be mounted to the cabinet.

A size of the module sealing portion may be larger than a size of the cabinet sealing portion.

At least one portion of the cabinet sealing portion is inclined to correspond to a module inclination portion of the module sealing portion.

The cabinet may include a duct opening communicating the cooling module with the storage chamber to receive cool air from the cooling module, and at least a portion of the sealing member may extend along an outer circumference of the duct opening.

The cabinet may include a module guide to guide a movement of the cooling module when the cooling module is inserted into the cabinet to be mounted to the cabinet, and the cooling module may include a mounting guide that is guided by the module guide and mounted to the module guide when the cooling module is inserted into the cabinet to be mounted to the cabinet.

The mounting guide may protrude from the module housing, and the module guide may include a groove to allow the mounting guide to be inserted.

The cooling module may further include a fixing member to fix the mounting guide to the module guide when the mounting guide is coupled to the module guide.

The module guide and the mounting guide may extend along the direction in which the cooling module is insertable into the cabinet to be mounted to the cabinet.

The refrigerator may further include silicon oil applied to the sealing member.

The module housing may include: a module body including an accommodating space in which the evaporator is mounted; and a module insulator provided in the module body such that the accommodating space is insulated from an outside.

The module housing may further include a base plate positioned below the module body and forming a machine room together with the module body, and the compressor and the condenser may be positioned in the machine room.

At least a portion of the module sealing portion may be positioned outside the accommodating space along a circumference of the accommodating space.

### [Advantageous Effects]

As is apparent from the above, according to an idea of the disclosure, because the evaporator of the refrigerator is mounted on the cooling module detachably mounted to the cabinet together with the compressor and the condenser, the cool air supply system may be easily maintained.

According to an idea of the disclosure, because the sealing member is provided between the cabinet and the cooling module, and a surface of the sealing member is inclined with respect to a direction in which the cooling module is mounted when the cooling module is in contact with the cabinet, a gap between the cabinet and the cooling module may be effectively sealed.

### [Description of Drawings]

These and/or other aspects of the disclosure will become apparent and more readily appreciated from the following description of the embodiments, taken in conjunction with the accompanying drawings of which:
FIG. 1 is a perspective view of a refrigerator according to an embodiment of the invention.
FIG. 2 shows a state in which a cooling module is separated from a cabinet of the refrigerator illustrated in FIG. 1;
FIG. 3 is a cross-sectional view of the refrigerator illustrated in FIG. 1;
FIG. 4 is an exploded perspective view of the cooling module illustrated in FIG. 2;
FIG. 5 is an exploded perspective view of a first duct module illustrated in FIG. 4;
FIG. 6 is an exploded perspective view of a second duct module illustrated in FIG. 4;
FIG. 7 is a bottom perspective view illustrating a coupling relationship between a cabinet, the cooling module, and a sealing member illustrated in FIG. 2;
FIG. 8 is a partially cross-sectional view illustrating a state in which the cabinet, the cooling module, and the sealing member illustrated in FIG. 7 are coupled to each other;
FIG. 9 shows a state in which the sealing member is pressed when the cooling module illustrated in FIG. 7 is mounted to the cabinet;
FIGS. 10 and 11 show a state in which the cooling module illustrated in FIG. 2 is mounted to the cabinet; and
FIG. 12 shows a state in which a cooling module of a refrigerator according to another embodiment of the invention is mounted to a cabinet.

### [Modes of the Invention]

All the embodiments of the present invention disclose all the technical features of the independent claim 1.

Also, like reference numerals or symbols denoted in the drawings of the present specification represent members or components that perform the substantially same functions.

The terms used in the present specification are used to describe the embodiments of the present disclosure. Accordingly, it should be apparent to those skilled in the art that the following description of exemplary embodiments of the present invention is provided for illustration purpose only and not for the purpose of limiting or/or restricting the invention. It is to be understood that the singular forms "a," "an," and "the" include plural referents unless the context clearly dictates otherwise. It will be understood that when the terms "includes," "comprises," "including," and/or "comprising," when used in this specification, specify the presence of stated features, figures, steps, components, or combination thereof, but do not preclude the presence or addition of one or more other features, figures, steps, components, members, or combinations thereof.

It will be understood that although the terms first, second, etc. may be used herein to describe various components, these components should not be limited by these terms, and the terms are only used to distinguish one component from another. For example, without departing from the scope of the present invention, the first component may be referred to as a second component, and similarly, the second component may also be referred to as a first component. The term "and/or" includes any combination of a plurality of related items or any one of a plurality of related items. As used herein, the term "and/or" includes any and all combinations of one or more of associated listed items.

Meanwhile, in the following description, the terms "front direction", "rear direction", "upper portion", "lower portion", etc. are defined based on the drawings, and the shapes and positions of the components are not limited by the terms.

Hereinafter, embodiments of the invention will be described in detail with reference to the accompanying drawings.

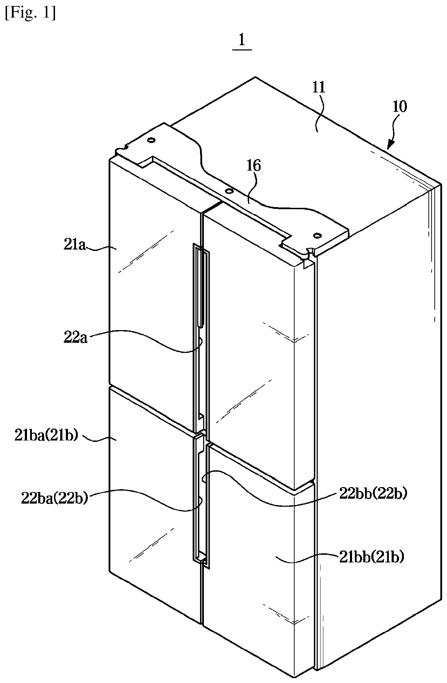

FIG. 1 is a perspective view of a refrigerator according to an embodiment of the invention.

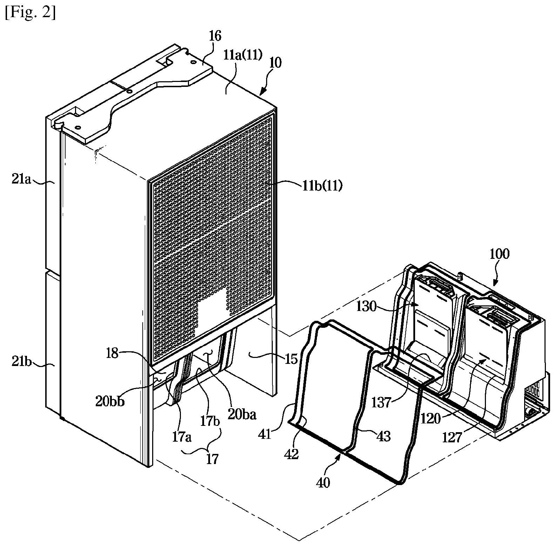

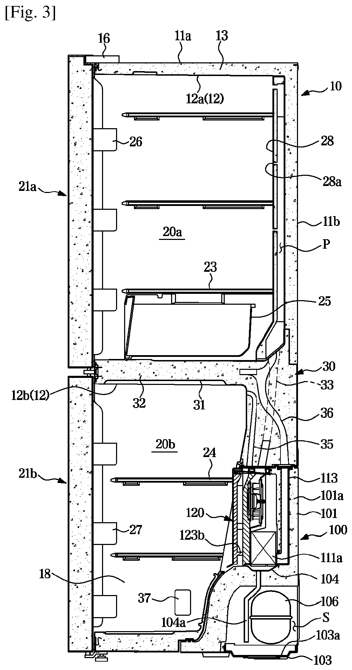

FIG. 2 shows a state in which a cooling module is separated from a cabinet of the refrigerator illustrated in FIG. 1, and FIG. 3 is a cross-sectional view of the refrigerator illustrated in FIG. 1.

Referring to FIGS. 1 to 3, a refrigerator 1 includes a cabinet 10 forming a plurality of storage chambers 20a and 20b, a plurality of doors 21a and 21b configured to open and close the storage chambers 20a and 20b, and a cooling module 100 detachably coupled to the cabinet 10 and configured to supply cool air to the storage chambers 20a and 20b.

The cabinet 10 may include an outer case 11, and an inner case 12 coupled to an inner side of the outer case 11. The outer case 11 may include a cabinet body 11a, wherein front and rear sides of the cabinet body 11a open, and a cabinet cover 11b covering the rear side of the cabinet body 11a. The front side of the cabinet body 11a may be covered by the doors 21a and 21b. The outer case 11 may be made of a metal material.

The inner case 12 may form the storage chambers 20a and 20b. The inner case 12 may be formed by injection-molding a plastic material. The inner case 12 may include a first inner case 12a forming the upper storage chamber 20a, and a second inner case 12b forming the lower storage chamber 20b.

A cabinet insulator 13 may be provided between the outer case 11 and the inner case 12. The cabinet insulator 13 may be urethane foam insulation, and may be used together with a vacuum insulation panel, as necessary.

The cabinet 10 may include a middle body 30 positioned between the first inner case 12a and the second inner case 12b. The middle body 30 may include a partition 31 for partitioning the storage chambers 20a and 20b into the upper chamber 20a and the lower chamber 20b. The middle body 30 may include a middle body insulator 32 therein to prevent heat exchange between the upper storage chamber 20a and the lower storage chamber 20b. The middle body insulator 32 may prevent a loss of cool air from a portion of a rear side of the lower storage chamber 20b to an outside.

In the middle body 30, a first cool air duct 33, a second cool air duct (not shown), a third cool air duct 35, and a first circulation duct 36 may be positioned. The first cool air duct 33, the second cool air duct, the third cool air duct 35, and the first circulation duct 36 may penetrate the middle body insulator 32.

The first cool air duct 33 may guide cool air generated by the cooling module 100 to the first storage chamber 20a. The second cool air duct may guide cool air generated by the cooling module 100 to a second storage chamber 20ba. The third cool air duct 35 may guide cool air generated by the cooling module 100 to a third storage chamber 20bb. The first circulation duct 36 may guide air that has cooled the first storage chamber 20a to the cooling module 100.

Front sides of the storage chambers 20a and 20b may open to store or take out food. The storage chambers 20a and 20b may include the upper storage chamber 20a and the lower storage chamber 20b. The upper storage chamber 20a may be used as a refrigerating chamber that is maintained at about 0°C to 5°C to keep food refrigerated. The upper storage chamber 20a is also referred to as the first storage chamber 20a.

Referring to FIG. 3, in the first storage chamber 20a, a guide cover 28 may be positioned to distribute cool air supplied from the first cool air duct 33. The guide cover 28 may form a passage P through which cool air transferred from the first cool air duct 33 flows, together with the first inner case 12a.

The guide cover 28 may include a guide hole 28a for supplying cool air transferred from the first cool air duct 3 to the first storage chamber 20a. A plurality of guide holes 28a may be arranged along up down directions.

The lower storage chamber 20b may include the second storage chamber 20ba and the third storage chamber 20bb. The cabinet 10 may include a separation plate 18 for partitioning the second storage chamber 20ba and the third storage chamber 20bb. The second storage chamber 20ba may be used as a freezing chamber that is maintained at about -30°C to 0°C to store food frozen. The third storage chamber 20bb may be used as a temperature changing chamber where temperature changes. However, the use of the first storage chamber 20a, the second storage chamber 20ba, and the third storage chamber 20bb may change.

The open front sides of the storage chambers 20a and 20b may be opened and closed by the doors 21a and 21b. In the storage chambers 20a and 20b, a plurality of shelves 23 and 24 on which food may be placed, and a storage container 25 in which food may be stored may be provided.

The upper door 21a may open and close the first storage chamber 20a. The upper door 21a may be coupled to the cabinet 10 to be rotatable in left and right directions. An upper door guard 26 for storing food may be provided on a rear surface of the upper door 21a. A hinge cover 16 may be provided at a portion of the cabinet 10 to which the upper door 21a is coupled. The upper door 21a is also referred to as the first door 21a.

The first door 21a may include a first door handle 22a. A user may grip the first door handle 22a to open and close the first door 21a.

The lower door 21b may open and close the lower storage chamber 20b. The lower door 21b may be coupled to the cabinet 10 to be rotatable in the left and right directions. A lower door guard 27 for storing food may be provided on a rear surface of the lower door 21b. The lower door 21b may include a second door 21ba for opening and closing the second storage chamber 20ba, and a third door 21bb for opening and closing the third storage chamber 20bb.

The lower door 21b may include a lower door handle 22b. The user may grip the lower door handle 22b to open and close the lower door 21b. Specifically, the second door 21ba may include a second door handle 22ba, and the third door 21bb may include a third door handle 22bb.

A lower portion of the cabinet 10 is provided with a cooling module mounting portion 15 to which the cooling module 100 is detachably mounted. The cooling module mounting portion 15 is provided with a size and shape corresponding to the cooling module 100.

The cabinet 10 may include a duct opening 17. The duct opening 17 may be formed in the cooling module mounting portion 15. The duct opening 17 may be formed in a portion of the cabinet 10 facing the cooling module 100. The duct opening 17 may include a second duct opening 17b for communicating the second storage chamber 20ba with the cooling module mounting portion 15, and a first duct opening 17a for communicating the third storage chamber 20bb with the cooling module mounting portion 15. The duct opening 17 may penetrate the cabinet 10.

The refrigerator 1 includes a sealing member 40 for sealing between the cabinet 10 and the cooling module 100. The sealing member 40 is positioned in the cooling module mounting portion 15. The sealing member 40 is positioned on an area where the cooling module 100 is coupled to the cabinet 10. A portion of the sealing member 40 may be positioned outside the duct opening 17 along a circumference of the duct opening 17. A portion of the sealing member 40 may be positioned outside the accommodating spaces 101b and 101c along circumferences of the accommodating spaces 101b and 101c. A plurality of sealing members 40 may be provided.

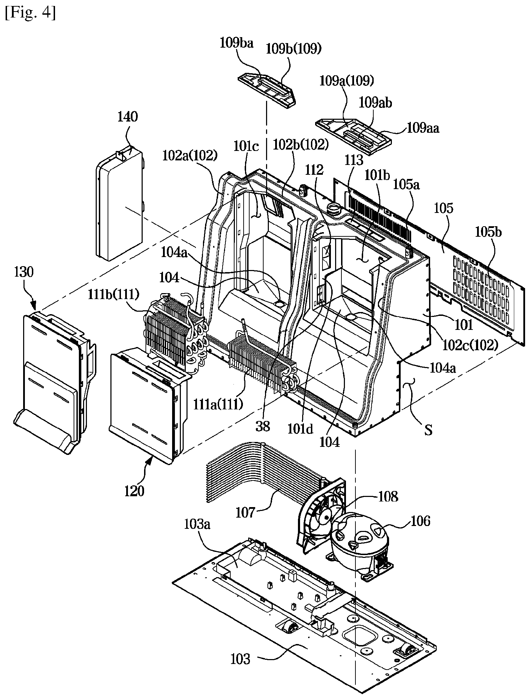

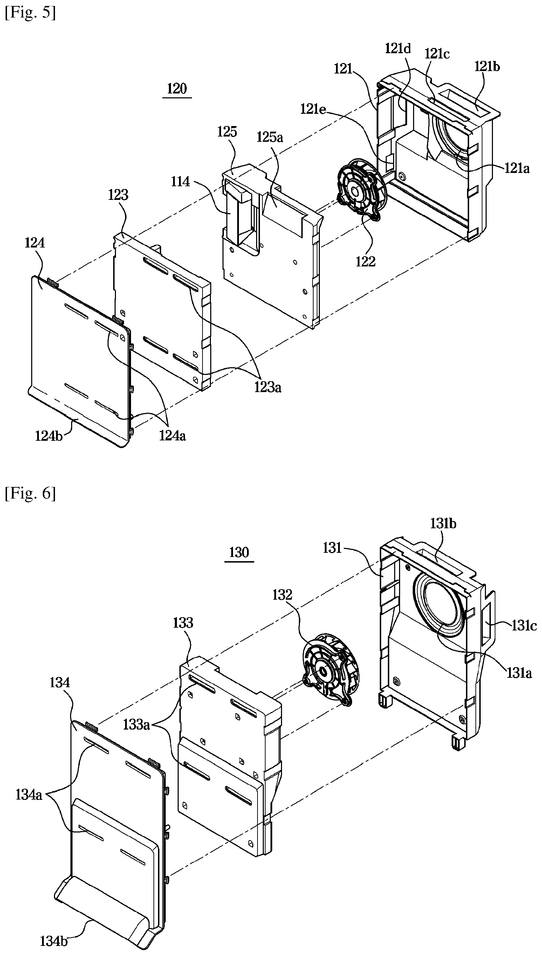

FIG. 4 is an exploded perspective view of the cooling module illustrated in FIG. 2, FIG. 5 is an exploded perspective view of a first duct module illustrated in FIG. 4, and FIG. 6 is an exploded perspective view of a second duct module illustrated in FIG. 4.

The cooling module 100 generates cool air by using evaporative latent heat of a refrigerant through a cooling cycle. The cooling module 100 may generate cool air to be supplied to the first storage chamber 20a, the second storage chamber 20ba, and the third storage chamber 20bb. The cooling module 100 is detachably mounted to the cabinet 10 from the outside.

Referring to FIG. 4, the cooling module 100 may include a module body 101, a base plate 103, and comprises a compressor 106, a condenser 107, an evaporator 111, and an expansion valve (not shown).

The module body 101 may form a portion of a rear surface of the refrigerator 1. The module body 101 may include a module insulator 101a provided therein to prevent a loss of cool air generated from the evaporator 111.

The module body 101 may include the accommodating spaces 101b and 101c in which the evaporator 111 is positioned. Specifically, the accommodating spaces 101b and 101c may include the first accommodating space 101b in which a first evaporator 111a is positioned, and the second accommodating space 101c in which a second evaporator 111b is positioned.

The module body 101 may include a separation wall 101d positioned between the first accommodating space 101b and the second accommodating space 101c. The separation wall 101d may correspond to a boundary between the second storage chamber 20ba and the third storage chamber 20bb. The module insulator 101a may also be positioned in an inside of the separation wall 101d.

In the separation wall 101d, a connection duct 112 may penetrate the module insulator 101a. The connection duct 112 may move cool air to be supplied to the third storage chamber 20bb. The connection duct 112 may communicate the first accommodating space 101b with the second accommodating space 101c. One end of the connection duct 112 may be connected to a first fan connection opening 121d, and the other end of the connection duct 112 may be connected to a second fan connection opening 131c.

In the separation wall 101d, a third circulation duct 38 may penetrate the module insulator 101a. The third circulation duct 38 may move air that has cooled the third storage chamber 20bb to the second evaporator 111b. The third circulation duct 38 may communicate the first accommodating space 101b with the second accommodating space 101c. The third circulation duct 38 may communicate a part of a space between a separation cover 125 and a first fan cover 123 with a space where the second evaporator 111b is positioned.

The module body 101 may be provided with a guide duct 113. The guide duct 113 may penetrate the module insulator 101a of the module body 101. The guide duct 113 may be connected to the first circulation duct 36. The guide duct 113 may communicate the first circulation duct 36 with the first accommodating space 101b where the first evaporator 111a is positioned.

The base plate 103 may be positioned below the module body 101. The base plate 103 may cover a bottom of the module body 101. The compressor 106 may be fixed to the base plate 103. The condenser 107 may be fixed to the base plate 103. A cooling fan 108 may be fixed to the base plate 103.

On the base plate 103, a collecting pan 103a may be positioned. The collecting pan 103a may collect condensate water generated by the condenser 107 and/or the evaporator 111. The condenser 107 may be positioned above the collecting pan 103a.

The module body 101 may include a plurality of drain pipes 104a and a plurality of drain pans 104 for guiding condensate water generated by the evaporator 111 to the collecting pan 103a. One of the drain pans 104 may be positioned below the evaporator 111. The drain pans 104 may be positioned below the first evaporator 111a and below the second evaporator 111b, respectively. The drain pans 104 may be positioned in the first accommodating space 101b and the second accommodating space 101c, respectively.

The drain pipes 104a may guide condensate water collected in the drain pans 104 to the collecting pan 103a. At least a portion of the drain pipes 104a may penetrate the module insulator 101a.

On the base plate 103, an electronic equipment box 140 may be positioned. The electronic equipment box 140 may be positioned on one side where the second accommodating space 101c is positioned. The electronic equipment box 140 may control the cooling module 100 to change temperature of the storage chambers 20a and 20b. The electronic device box 140 may be supplied power for driving the refrigerator 1.

The module cover 105 may cover a rear lower portion of the module body 101. The module cover 105 may cover a machine room S which is provided in the lower portion of the module body 101 and in which the compressor 106, the condenser 107, and the cooling fan 108 are positioned, together with the base plate 103. The module cover 105 may include a cover inlet 105a through which outside air is introduced by the cooling fan 108, and a cover outlet 105b through which introduced air is discharged to the outside.

The compressor 106 compresses a refrigerant and moves the refrigerant to the condenser 107. The condenser 107 condenses the refrigerant and moves the refrigerant to the expansion valve. The cooling fan 108 may cool the compressor 106 and the condenser 107. When the cooling fan 108 is driven, air may be introduced into the machine room S through the cover inlet 105a and heat-exchanged with the condenser 107 and the compressor 106, and then discharged to the outside of the machine room S through the cover outlet 105b.

The module body 101, the base plate 103, and the module cover 105 described above are collectively referred to as a module housing.

The evaporator 111 generates cool air. The evaporator 111 may be positioned in the accommodating spaces 101b and 101c. The evaporator 111 may include the first evaporator 111a and the second evaporator 111b. The first evaporator 111a may be positioned in the first accommodating space 101b. The second evaporator 111b may be positioned in the second accommodating space 101c.

The cooling module 100 may include a cap 109 covering an open upper area of the accommodating spaces 101b and 101c. The cap 109 may include a first cap 109a for covering a upper area of the first accommodating space 101b, and a second cap 109b for covering a upper area of the second accommodating space 101c.

The first cap 109a may be positioned above a first duct module 120. The first cap 109a may include a 1a-th cap hole 109aa positioned to correspond to a first-a fan outlet 121b formed in a first fan case 121, and a 1b-th cap hole 109ab positioned to correspond to a 1b-th fan outlet 121c formed in the first fan case 121. The 1a-th cap hole 109aa may communicate with the first cool air duct 33. The 1b-th cap hole 109ab may communicate with the third cool air duct 35.

The second cap 109b may be positioned above a second duct module 130. The second cap 109b may include a second cap hole 109ba positioned to correspond to a second fan outlet 131b formed in a second fan case 131. The second cap hole 109ba may communicate with the second cool air duct.

In the accommodating spaces 101b and 101c, the duct modules 120 and 130 for moving cool air generated by the evaporator 111 to the storage chambers 20a and 20b may be positioned. The duct modules 120 and 130 may include the first duct module 120 positioned in the first accommodating space 101b and the second duct module 130 positioned in the second accommodating space 101c.

Specifically, referring to FIGS. 5 and 6, the first duct module 120 may include the first fan case 121, a first fan 122, the first fan cover 123, a first duct cover 124, and the separation cover 125.

The first fan case 121 may cover the first fan 122. The first fan case 121 may be detachably coupled to the first accommodating space 101b. The first fan case 121 may be fixed to the module body 101.

The first fan case 121 may include a first fan inlet 121a through which air heat-exchanged with the first evaporator 111a is introduced. The first fan inlet 121a may be formed in a rear side of the first fan case 121.

The first fan case 121 may include the 1a-th fan outlet 121b communicating with the first cool air duct 33. The 1a-th fan outlet 121b may discharge cool air to be supplied to the first storage chamber 20a. The 1a-th fan outlet 121b may be formed in a top side of the first fan case 121.

The first fan case 121 may include the 1b-th fan outlet 121c communicating with the third cool air duct 35. The 1b-th fan outlet 121c may discharge cool air to be supplied to the third storage chamber 20bb. The 1b-th fan outlet 121c may be formed in the top side of the first fan case 121.

The first fan case 121 may include the first fan connection opening 121d communicating with the connection duct 112. The first fan connection opening 121d may receive air blown by a second fan 132. The first fan connection opening 121d may receive cool air to be supplied to the third storage chamber 20bb. The first fan connection port 121d may be formed in a lateral side of the first fan case 121.

The first fan case 121 may include a first fan circulation opening 121e communicating with the third circulation duct 38. The first fan circulation opening 121e may guide air that has cooled the third storage chamber 20bb to the second evaporator 111b. The first fan circulation opening 121e may discharge air introduced into the first duct module 120 through a first duct circulation opening 127 to the second accommodating space 101c in which the second evaporator 111b is positioned. The first fan circulation opening 121e may be formed in a side of the first fan case 121 facing the separation wall 101d.

The first fan 122 may be driven to supply air heat-exchanged with the first evaporator 111a to the first storage chamber 20a. The first fan 122 may be positioned in the first accommodating space 101b. The first fan 122 may be fixed to the separation cover 125.

The first fan cover 123 may be coupled to a front side of the first fan case 121. The separation cover 125 may be positioned between the first fan cover 123 and the first fan case 121.

Referring to FIG. 3, a separation rib 123b may be provided on a rear surface of the first fan cover 123 to partition a space between the separation cover 125 and the first fan cover 123. By the separation rib 123b, the space between the first fan cover 123 and the separation cover 125 may be partitioned into a space to which air is supplied from the connection duct 112 and a space to which air that has cooled the third storage chamber 20bb returns.

The separation cover 125 may cover the front side of the first fan case 121. The separation cover 125 may separate an inside space defined by the first fan case 121 and the first fan cover 123. The separation cover 125 may form a space through which cool air to be supplied to the first storage chamber 20a moves, together with the first fan case 121. The separation cover 125 may form a space through which cool air to be supplied to the third storage chamber 20bb moves, together with the first fan cover 123. Behind the separation cover 125, a passage through which air heat-exchanged with the first evaporator 111a moves may be formed, and in front of the separation cover 125, a passage through which air heat-exchanged with the second evaporator 111b moves may be formed. Also, behind the separation cover 125, a passage through which air moving by the first fan 122 flows may be formed, and in front of the separation cover 125, a passage through which air moving by the second fan 132 flows may be formed.

The separation cover 125 may prevent air heat-exchanged with the first evaporator 111a from being mixed with air heat-exchanged with the second evaporator 111b. The separation cover 125 may prevent air moving by the first fan 122 from being mixed with air moving by the second fan 132. The separation cover 125 may support the first fan 122.

The separation cover 125 may include a hole forming portion 125a that forms a hole communicating with the third cool air duct 35 when the separation cover 125 is coupled to the first fan cover 123. The hole forming portion 125a may be formed in an upper portion of the separation cover 125.

The separation cover 125 may be provided with a connection duct damper 114 for adjusting an amount of cool air passing through the connection duct 112. Temperature of the third storage chamber 20bb may be adjusted according to a degree of opening of the connection duct damper 114.

The first fan cover 123 may be positioned in front of the separation cover 125. The first fan cover 123 may form a space through which cool air to be supplied to the third storage chamber 20bb flows, together with the separation cover 125. The first fan cover 123 may be detachably coupled to the first fan case 121.

The first fan cover 123 may include a first cover hole 123a communicating with the third storage chamber 20bb. The first cover hole 123a may discharge a part of air introduced through the connection duct 112 to the third storage chamber 20bb. A part of cool air introduced through the connection duct 112 may be transferred to the third cool air duct 35 and then supplied to the third storage chamber 20bb, and the other part of the cool air may be supplied to the third storage chamber 20bb through the first cover hole 123a.

The first duct cover 124 may be positioned in front of the first fan cover 123. The first duct cover 124 may cover a front side of the first fan cover 123. The first duct cover 124 may include a first duct hole 124a communicating with the third storage chamber 20bb. The first duct hole 124a may be positioned to correspond to the first cover hole 123a. A part of cool air blown by the second fan 132 may be supplied to the third storage chamber 20bb through the first cover hole 123a and the first duct hole 124a.

The first duct cover 124 may include a first duct inlet 124b. The first duct inlet 124b may be spaced a predetermined distance from the module body 101. The first duct inlet 124 may form the first duct circulation opening 127 together with the module body 101. Air that has cooled the third storage chamber 20bb through the first duct circulation opening 127 may return to the first duct module 120. The air returned through the first duct circulation opening 127 may be guided to the second evaporator 111b through the third circulation duct 38.

The second duct module 130 may include the second fan case 131, the second fan 132, a second fan cover 133, and a second duct cover 134.

The second fan case 131 may be positioned in the second accommodating space 101c. The second fan case 131 may include a second fan inlet 131a through which air heat-exchanged with the second evaporator 111b is introduced. The second fan inlet 131a may be formed in a rear side of the second fan case 131.

The second fan case 131 may include the second fan outlet 131b communicating with the second cool air duct 34. The second fan outlet 131b may discharge cool air to be supplied to the second storage chamber 20ba. The second fan outlet 131b may be formed in a top side of the second fan case 131.

The second fan case 131 may include the second fan connection opening 131c communicating with the connection duct 112. The second fan connection opening 131c may discharge air blown by the second fan 132 to the connection duct 112. The second fan connection opening 131c may discharge cool air to be supplied to the third storage chamber 20bb. The second fan connection opening 131c may be formed in a lateral side of the second fan case 131.

The second fan 132 may be driven to supply air heat-exchanged with the second evaporator 111b to the second storage chamber 20ba and the third storage chamber 20bb. The second fan 132 may be positioned in the second accommodating space 101c. The second fan 132 may be fixed to the second fan cover 133.

The second fan cover 133 may be coupled to the front side of the second fan case 131. The second fan cover 133 may cover the front side of the second fan case 131. The second fan cover 133 may form a space through which cool air to be supplied to the second storage chamber 20ba and the third storage chamber 20bb flows, together with the second fan case 131. The second fan cover 133 may be fixed to the second fan case 131.

The second fan cover 133 may include a second cover hole 133a communicating with the second storage chamber 20ba. The second cover hole 133a may discharge a part of air drawn by the second fan 132 to the second storage chamber 20ba. A part of air drawn by the second fan 132 may be transferred to the second cool air duct and then supplied to the second storage chamber 20ba, and the other part of the air may be supplied to the second storage chamber 20ba through the second cover hole 133a. The second fan cover 133 may support the second fan 132.

The second duct cover 134 may be positioned in front of the second fan cover 133. The second duct cover 134 may cover a front side of the second fan cover 133.

The second duct cover 134 may include a second duct hole 134a communicating with the second storage chamber 20ba. The second duct hole 134a may correspond to the second cover hole 133a. A part of cool air blown by the second fan 132 may be supplied to the second storage chamber 20ba through the second cover hole 133a and the second duct hole 134a.

The second duct cover 134 may include a second duct inlet 134b. The second duct inlet 134b may be spaced a predetermined distance from the module body 101. The second duct inlet 134b may form the second duct circulation opening 137 together with the module body 101. Air that has cooled the second storage chamber 20ba through the second duct circulation opening 137 may return to the second duct module 130. Air returned through the second duct circulation opening 137 may be guided to the second evaporator 111b.

The separation plate 18 may include the second circulation duct 37. The second circulation duct 37 may penetrate the separation plate 18. The second circulation duct 37 may communicate the second storage chamber 20ba with the third storage chamber 20bb. A part of air that has cooled the third storage chamber 20ba may move to the second storage chamber 20ba through the second circulation duct 37. The air that has moved to the second storage chamber 20ba may return to the cooling module 100 together with the air that has cooled the second storage chamber 20ba.

According to the present invention, in the refrigerator 1 all components of the cool air supply system are arranged in the cooling module 100, and the cooling module 100 is detachably mounted to the cabinet 10, so that cooling performance of the cool air supply system may be tested before the cooling module 100 is mounted to the cabinet 10. In addition, when the cool air supply system is separated from the cabinet 10 to be maintained and repaired, maintenance of the refrigerator 1 may be easy.

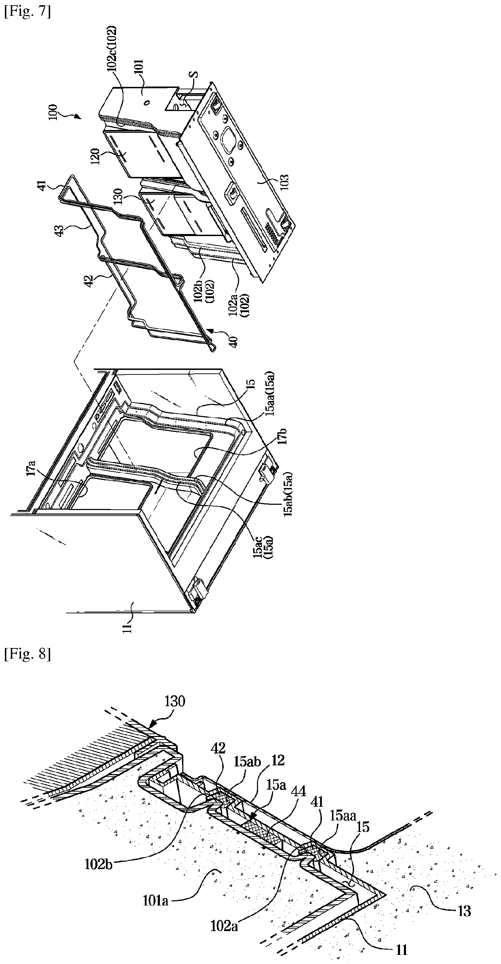

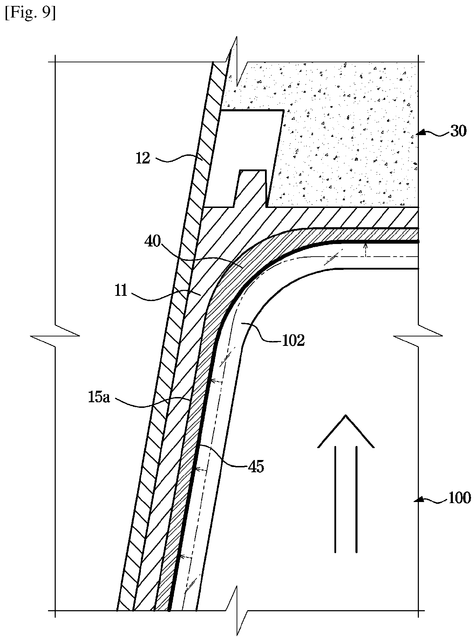

FIG. 7 is a bottom perspective view illustrating a coupling relationship between the cabinet, the cooling module, and the sealing member illustrated in FIG. 2, FIG. 8 is a partially cross-sectional view illustrating a state in which the cabinet, the cooling module, and the sealing member illustrated in FIG. 7 are coupled to each other, and FIG. 9 shows a state in which the sealing member is pressed when the cooling module illustrated in FIG. 7 is mounted to the cabinet.

Referring to FIGS. 7 and 8, a cabinet sealing portion 15a is formed in the cooling module mounting portion 15 of the cabinet 10. The cabinet sealing portion 15a is formed on a surface of the cabinet 10 facing the cooling module 100. The cabinet sealing portion 15a may be formed on at least one of an inner upper surface, an inner front surface, and an inner lower surface of the cooling module mounting portion 15. The cabinet sealing portion 15a may extend along an outer circumference of the duct opening 17.

The cabinet sealing portion 15a may include a third cabinet sealing portion 15ac, at least a portion of which extends along an outer circumference of the first duct opening 17a, a second cabinet sealing portion 15ab, at least a portion of which extends along an outer circumference of the second duct opening 17b, and a first cabinet sealing portion 15aa extending along the outer circumferences of the second cabinet sealing portion 15ab and the third cabinet sealing portion 15ac.

There is a module sealing portion 102, which may be formed on the module body 101 of the module housing of the cooling module 100. The module sealing portion 102 may be formed on a surface of the module body 101 facing the cabinet 10. The module sealing portion 102 may be formed on at least one of an upper surface, a front surface, and a bottom surface of the module body 101. The module sealing portion 102 faces the cabinet sealing portion 15a.
The module sealing portion 102 may extend along outer circumferences of the accommodating spaces 101b and 101c. The module sealing portion 102 may have a size that is different from that of the cabinet sealing portion 15a.

The module sealing portion 102 may include a third module sealing portion 102c, at least a portion of which extends along an outer circumference of the first accommodating space 101b, a second module sealing portion 102b, at least a portion of which extends along an outer circumference of the second accommodating space 101c, and a first module sealing portion 102a extending along the outer circumferences of the second module sealing portion 102b and the third module sealing portion 102c.

The sealing member 40 is positioned between the cabinet sealing portion 15a and the module sealing portion 102. The sealing member 40 may include a first sealing member 41 positioned between the first cabinet sealing portion 15aa and the first module sealing portion 102a, a second sealing member 42 positioned between a second cabinet sealing portion 15b and the second module sealing portion 102b, and a third sealing member 43 positioned between a third cabinet sealing portion 15c and the third module sealing portion 102c.

Specifically, referring to FIG. 8, the cabinet sealing portion 15a may include a portion formed as a recessed groove, and the module sealing portion 102 may include a portion formed as a protrusion protruding to be inserted into the cabinet sealing portion 15a. In this case, the sealing member 40 may be inserted into the groove of the cabinet sealing portion 15a and pressed by the protrusion of the module sealing portion 102.

Specifically, the first sealing member 41 may be positioned in the first cabinet sealing portion 15aa, and may be pressed by the first module sealing portion 102a. The second sealing member 42 may be inserted in the second cabinet sealing portion 15ab and pressed by the second module sealing portion 102b.

The groove of the cabinet sealing portion 15a has a size that is larger than that of the protrusion of the module sealing portion 102. Accordingly, a gap is made between the cabinet sealing portion 15a and the module sealing portion 102. The sealing member 40 is positioned in the gap.

In addition, the module sealing portion 102 may include a portion formed as a recessed groove, and the cabinet sealing portion 15a may include a portion formed as a protrusion protruding to be inserted into the module sealing portion 102. The groove of the module sealing portion 102 may be positioned between protrusions of the module sealing portion 102, and the protrusion of the cabinet sealing portion 15a may be positioned between grooves of the cabinet sealing portion 15a.

In this case, the sealing member 40 may be inserted into the groove of the module sealing portion and pressed by the protrusion of the cabinet sealing portion 15a. Specifically, although not shown in FIG. 2, the sealing member 40 may include a fourth sealing member 44. The fourth sealing member 44 may be positioned in the groove of the module sealing portion 102, and may be pressed by the cabinet sealing portion 15a.

The groove of the module sealing portion 102 has a size that is larger than that of the protrusion of the cabinet sealing portion 15a. Accordingly, a gap is made between the module sealing portion 102 and the cabinet sealing portion 15a. The sealing member 40 is positioned in the gap.

In FIG. 8, the first cabinet sealing portion 15aa, the first module sealing portion 102a, the first sealing member 41, the second cabinet sealing portion 15ab, the second module sealing portion 102b, and the second sealing member 42 are shown. However, the third cabinet sealing portion 15ac, the third module sealing portion 102c, and the third sealing member 43 may also be provided with the same configuration as the first cabinet sealing portion 15aa, the first module sealing portion 102a, the first sealing member 41, the second cabinet sealing portion 15ab, the second module sealing portion 102b, and the second sealing member 42, respectively.

Referring to FIGS. 8 and 9, the sealing member 40 is pressed between the cabinet sealing portion 15a and the module sealing portion 102 to tightly seal a gap between the cabinet 10 and the cooling module 100. The sealing member 40 may be pressed and deformed by the cooling module 100 when the cooling module 100 is mounted to the cabinet 10. When the sealing member 40 is pressed and deformed by the module sealing portion 102 of the cooling module 100, the sealing member 40 may completely fill a gap formed between the cabinet sealing portion 15a and the module sealing portion 102. Accordingly, the sealing member 40 may tightly seal the gap between the cabinet 10 and the cooling module 100.

Referring to FIG. 9, silicone oil 45 may be applied to the sealing member 40 to reduce a frictional force with the module sealing portion 102 of the cooling module 100 when the cooling module 100 is mounted. The silicone oil 45 may be applied along an outer surface of the sealing member 40. The silicone oil 45 may also be applied to a surface of the sealing member 40 being in contact with the cabinet sealing portion 15a.

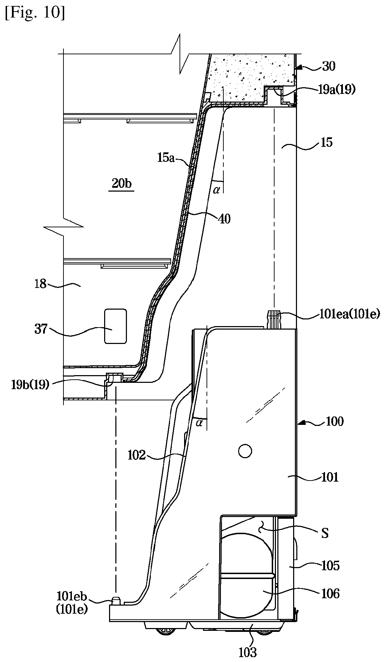

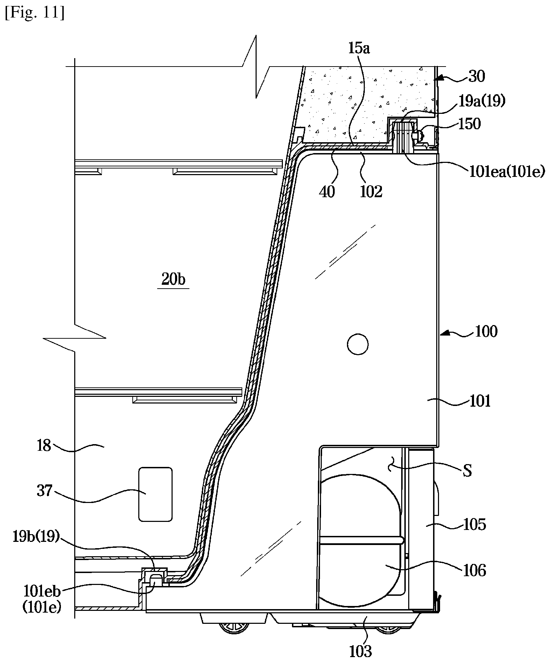

FIGS. 10 and 11 show a state in which the cooling module illustrated in FIG. 2 is mounted to the cabinet.

Referring to FIGS. 10 and 11, at least a portion of the module sealing portion 102 is inclined with respect to a direction in which the cooling module 100 is mounted to the cabinet 10. At least a portion of the module sealing portion 102 may be positioned at a first angle α with respect to the direction in which the cooling module 100 is mounted to the cabinet 10. At least a portion of the cabinet sealing portion 15a is inclined to correspond to a module inclination portion of the module sealing portion 102. Specifically, the module sealing portion 102 and the cabinet sealing portion 15a may be inclined to gradually descend along the direction in which the cooling module 100 is mounted to the cabinet 10.

According to this configuration, the refrigerator 1 according to an embodiment of the invention may reduce a friction force that may occur between the cabinet 10, the sealing member 40, and the cooling module 100 when the cooling module 100 is mounted to the cabinet 10. In addition, when the cooling module 100 is mounted to the cabinet 10, the sealing member 40 may be pressed and deformed to fill a gap between the cabinet 10 and the cooling module 100, thereby tightly sealing the gap between the cabinet 10 and the cooling module 100. Further, the sealing member 40 may compensate for errors generated in a manufacturing process of the cabinet 10 and the cooling module 100.

The cabinet 10 may include a module guide 19 for guiding a movement of the cooling module 100 when the cooling module 100 is mounted. The module guide 19 may be in the shape of a groove to allow the mounting guide 101e to be inserted therein. The module guide 19 may include at least one first module guide 19a formed at an upper portion of the cooling module mounting portion 15 and at least one second module guide 19b formed at a lower portion of the cooling module mounting portion 15.

The cooling module 100 may include a mounting guide 101e that is guided by the module guide 19 and coupled to the module guide 19 when the cooling module 100 is mounted to the cabinet 10. The mounting guide 101e may protrude from the module body 101. The mounting guide 101e may include at least one first mounting guide 101ea positioned at an upper portion of the module body 101, and at least one second mounting guide 101eb positioned at a lower portion of the module body 101.

The number of the first mounting guide 101ea and the second mounting guide 101eb may correspond to the number of the first module guide 19a and the second module guide 19b.

The module guide 19 may extend along the direction in which the cooling module 100 is mounted to the cabinet 10. In FIGS. 10 and 11, the cooling module 100 is mounted to the cabinet 10 along the up and down directions, and thus, the module guide 19 may extend along the up and down directions.

The mounting guide 101e may extend along the direction in which the cooling module 100 is mounted to the cabinet 10. In FIGS. 10 and 11, the cooling module 100 is mounted to the cabinet 10 along the up and down directions, and thus the mounting guide 101e may extend along the up and down directions.

Referring to FIG. 11, the cooling module 100 may further include a fixing member 150 for fixing the mounting guide 101e to the module guide 19 when the mounting guide 101e is coupled to the module guide 19. The cooling module 100 may be firmly mounted to and fixed to the cabinet 10 by the fixing member 150.

According to this configuration, in the refrigerator 1 according to an embodiment of the disclosure, the cooling module 100 may be stably mounted to the mounting position of the cabinet 10.

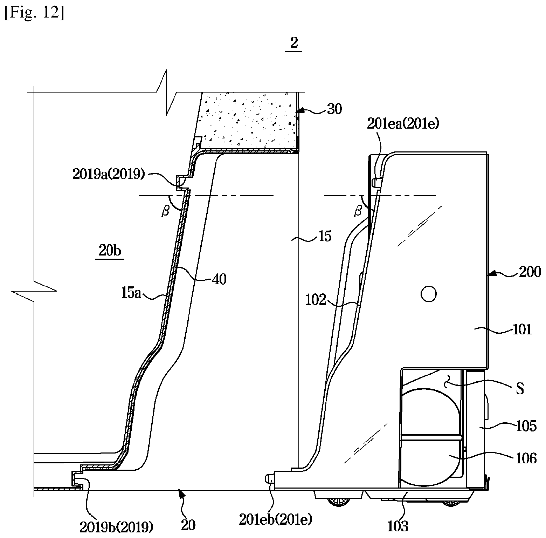

FIG. 12 shows a state in which a cooling module of a refrigerator according to another embodiment is mounted to a cabinet.

A refrigerator 2 according to another embodiment of the invention will be described below with reference to FIG. 12. This embodiment also discloses all the technical features of claim 1. In the following description about the refrigerator 2 shown in FIG. 12, the same components of the refrigerator 2 as those of the refrigerator 1 illustrated in FIGS. 1 to 11 will be assigned the same reference numerals, and a detailed description thereof will be omitted.

Referring to FIG. 12, a cooling module 200 may be mounted to a cabinet 20 along the front and rear directions. At least a portion of the module sealing portion 102 and the cabinet sealing portion 15a may be positioned at a second angle β with respect to the direction in which the cooling module 200 is mounted. Accordingly, the cabinet 20 may include a module guide 2019 extending in the front and rear directions. The cooling module 200 may include a mounting guide 201e extending in the front and rear directions.

The module guide 2019 may include a first module guide 2019a positioned at the upper portion of the cooling module mounting portion 15, and a second module guide 2019b positioned at the lower portion of the cooling module mounting portion 15. The module guide 2019 may have a groove to allow the mounting guide 201e to be inserted therein.

The mounting guide 201e may include a first mounting guide 201ea positioned at the upper portion of the module body 101, and a second mounting guide 201eb positioned at the lower portion of the module body 101. The first mounting guide 201ea may be inserted into the first module guide 2019a. The second mounting guide 2019eb may be inserted into the second module guide 2019b. The number of the first mounting guide 201ea and the second mounting guide 201eb may correspond to the number of the first module guide 2019a and the second module guide 2019b.

In addition, although not shown, the refrigerator 2 may further include the fixing member 150, as illustrated in FIG. 11, to allow the mounting guide 201e of the cooling module 200 to be firmly mounted and fixed to the module guide 2019 of the cabinet 20.

According to this configuration, in the refrigerator 2 according to another embodiment of the invention, the cooling module 200 may be stably mounted to the mounting position of the cabinet 20.

The foregoing has illustrated and described specific embodiments. The present invention is disclosed in the following claims.

## Claims

1. A refrigerator comprising:
a cabinet (10) forming a storage chamber (20a, 20b) therein and including a cooling module mounting portion (15);
a cabinet sealing portion (15a) formed on an outer surface of the cooling module mounting portion (15),
a cooling module (100) detachably mounted to the cooling module mounting portion (15) and including an evaporator (111), a condenser (107), and a compressor (106), wherein the cooling module (100) includes a module housing, and the module housing includes a module sealing portion (102) facing the cabinet sealing portion (15a), and
a sealing member (40) positioned between the cabinet sealing portion (15a) and the module sealing portion (102),
**characterized in that** the module sealing portion (102) includes an inclined portion which is positioned at an inclination with respect to a direction in which the cooling module (100) is insertable into the cabinet (10) to be mounted to the cabinet (10),
wherein the cabinet sealing portion (15a) includes an inclined portion which is inclined to correspond to the inclined portion of the module sealing portion (102),
wherein the sealing member (40) includes an inclined portion which is inclined to correspond to the inclined portion of the module sealing portion (102) and the inclined portion of the cabinet sealing portion (15a), the inclined portion of the sealing member (40) being contacted to the corresponding inclined portion of the module sealing portion (102) and the corresponding inclined portion of the cabinet sealing portion (15a).

2. The refrigerator according to claim 1, wherein
the cabinet sealing portion (15a) comprises a recessed groove,
the module sealing portion (102) comprises a protrusion protruding so as to be inserted into the cabinet sealing portion (15a) when the cooling module (100) is inserted into the cabinet (10) to be mounted to the cabinet (10) and
the sealing member (40) is inserted into the cabinet sealing portion (15a) and pressed by the module sealing portion (102), when the cooling module (100) is inserted into the cabinet (10) to be mounted to the cabinet (10).

3. The refrigerator according to claim 2, wherein a size of the cabinet sealing portion (15a) is larger than a size of the module sealing portion (102).

4. The refrigerator according to claim 1, wherein
the module sealing portion (102) comprises a recessed groove,
the cabinet sealing portion (15a) comprises a protrusion protruding so as to be inserted into the module sealing portion (102) when the cooling module (100) is inserted into the cabinet (10) to be mounted to the cabinet (10), and
the sealing member (40) is inserted into the module sealing portion (102) and pressed by the cabinet sealing portion (15a) when the cooling module (100) is inserted into the cabinet (10) to be mounted to the cabinet (10).

5. The refrigerator according to claim 4, wherein a size of the module sealing portion (102) is larger than a size of the cabinet sealing portion (15a).

6. The refrigerator according to claim 1, wherein
the cabinet (10) comprises a duct opening communicating the cooling module (100) with the storage chamber (20a, 20b) to receive cool air from the cooling module (100), and
at least a portion of the sealing member (40) extends along an outer circumference of the duct opening.

7. The refrigerator according to claim 1, wherein
the cabinet (10) comprises a module guide (19) to guide a movement of the cooling module (100) when the cooling module (100) is inserted into the cabinet (10) to be mounted to the cabinet (10), and
the cooling module (100) comprises a mounting guide (101e) that is guided by the module guide (19) and mounted to the module guide (19) when the cooling module (100) is inserted into the cabinet (10) to be mounted to the cabinet (10).

8. The refrigerator according to claim 7, wherein
the mounting guide (101e) protrudes from the module housing, and
the module guide (19) comprises a groove to allow the mounting guide (101e) to be inserted.

9. The refrigerator according to claim 7,
wherein the cooling module (100) further comprises a fixing member to fix the mounting guide (101e) to the module guide (19) when the mounting guide (101e) is coupled to the module guide (19).

10. The refrigerator according to claim 7, wherein the module guide (19) and the mounting guide (101e) extend along the direction in which the cooling module (100) is insertable into the cabinet (10) to be mounted to the cabinet (10).

11. The refrigerator according to claim 1, further comprising silicon oil applied to the sealing member (40).

12. The refrigerator according to claim 1, wherein the module housing comprises:
a module body including an accommodating space in which the evaporator (111) is mounted; and
a module insulator provided in the module body such that the accommodating space is insulated from an outside.

13. The refrigerator according to claim 12, wherein
the module housing further comprises a base plate positioned below the module body and forming a machine room together with the module body, and
the compressor (106) and the condenser (107) are positioned in the machine room.

14. The refrigerator according to claim 12,
wherein at least a portion of the module sealing portion (102) is positioned outside the accommodating space along a circumference of the accommodating space.

## Patentansprüche

1. Kühlschrank, umfassend:
ein Gehäuse (10), das eine Lagerkammer (20a, 20b) darin ausbildet und einen Kühlmodul-Montageabschnitt (15) aufweist;
einen Gehäusedichtungsabschnitt (15a), der an einer Außenfläche des Kühlmodul-Montageabschnitts (15) ausgebildet ist;
ein Kühlmodul (100), das abnehmbar an dem Kühlmodul-Montageabschnitt (15) angebracht ist und einen Verdampfer (111), einen Kondensator (107) und einen Kompressor (106) aufweist, wobei das Kühlmodul (100) ein Modulgehäuse aufweist und das Modulgehäuse einen Moduldichtungsabschnitt (102) aufweist, der dem Gehäusedichtungsabschnitt (15a) zugewandt ist, und
ein Dichtungselement (40), das zwischen dem Gehäusedichtungsabschnitt (15a) und dem Moduldichtungsabschnitt (102) angeordnet ist,
**dadurch gekennzeichnet, dass** der Moduldichtungsabschnitt (102) einen geneigten Abschnitt aufweist, der in einer Neigung in Bezug auf eine Richtung positioniert ist, in der das Kühlmodul (100) in das Gehäuse (10) eingeführt werden kann, um an dem Gehäuse (10) montiert zu werden,
wobei der Gehäusedichtungsabschnitt (15a) einen geneigten Abschnitt aufweist, der so geneigt ist, dass er dem geneigten Abschnitt des Moduldichtungsabschnitts (102) entspricht,
wobei das Dichtungselement (40) einen geneigten Abschnitt aufweist, der so geneigt ist, dass er dem geneigten Abschnitt des Moduldichtungsabschnitts (102) und dem geneigten Abschnitt des Gehäusedichtungsabschnitts (15a) entspricht, wobei der geneigte Abschnitt des Dichtungselements (40) mit dem entsprechenden geneigten Abschnitt des Moduldichtungsabschnitts (102) und dem entsprechenden geneigten Abschnitt des Gehäusedichtungsabschnitts (15a) in Kontakt ist.

2. Kühlschrank nach Anspruch 1, wobei
der Gehäusedichtungsabschnitt (15a) eine vertiefte Nut aufweist,
der Moduldichtungsabschnitt (102) einen Vorsprung aufweist, der so vorsteht, dass er in den Gehäusedichtungsabschnitt (15a) eingeführt wird, wenn das Kühlmodul (100) in das Gehäuse eingeführt wird, um an dem Gehäuse (10) montiert zu werden, um an dem Gehäuse (10) montiert zu werden, und
das Dichtungselement (40) in den Gehäusedichtungsabschnitt (15a) eingesetzt und durch den Moduldichtungsabschnitt (102) gepresst wird, wenn das Kühlmodul (100) in das Gehäuse (10) eingesetzt wird, um an dem Gehäuse (10) montiert zu werden.

3. Kühlschrank nach Anspruch 2, wobei eine Größe des Gehäusedichtungsabschnitts (15a) größer ist als eine Größe des Moduldichtungsabschnitts (102).

4. Kühlschrank nach Anspruch 1, wobei
der Moduldichtungsabschnitt (102) eine vertiefte Nut aufweist,
der Gehäusedichtungsabschnitt (15a) einen Vorsprung aufweist, der so vorsteht, dass er in den Moduldichtungsabschnitt (102) eingeführt wird, wenn das Kühlmodul (100) in das Gehäuse (10) eingeführt wird, um an dem Gehäuse (10) montiert zu werden, und
das Dichtungselement (40) in den Moduldichtungsabschnitt (102) eingesetzt und durch den Gehäusedichtungsabschnitt (15a) gepresst wird, wenn das Kühlmodul (100) in das Gehäuse eingesetzt wird, um an dem Gehäuse (10) montiert zu werden.

5. Kühlschrank nach Anspruch 4, wobei die Größe des Moduldichtungsabschnitts (102) größer ist als eine Größe des Gehäusedichtungsabschnitts (15a).

6. Kühlschrank nach Anspruch 1, wobei
das Gehäuse (10) eine Kanalöffnung aufweist, die das Kühlmodul (100) mit der Lagerkammer (20a, 20b) verbindet, um Kühlluft von dem Kühlmodul (100) aufzunehmen, und
mindestens ein Abschnitt des Dichtungselements (40) sich entlang eines Außenumfangs der Kanalöffnung erstreckt.

7. Kühlschrank nach Anspruch 1, wobei
das Gehäuse (10) eine Modulführung (19) umfasst, um eine Bewegung des Kühlmoduls (100) zu führen, wenn das Kühlmodul (100) in das Gehäuse (10) eingesetzt wird, um an dem Gehäuse (10) montiert zu werden, und
das Kühlmodul (100) eine Montageführung (101e) umfasst, die von der Modulführung (19) geführt und an der Modulführung (19) montiert wird, wenn das Kühlmodul (100) in das Gehäuse (10) eingesetzt wird, um an dem Gehäuse (10) montiert zu werden.

8. Kühlschrank nach Anspruch 7, wobei
die Montageführung (101e) aus dem Modulgehäuse vorsteht, und
die Modulführung (19) eine Nut aufweist, in die die Montageführung (101e) eingeführt werden kann.

9. Kühlschrank nach Anspruch 7, wobei das Kühlmodul (100) ferner ein Befestigungselement umfasst, um die Montageführung (101e) an der Modulführung (19) zu befestigen, wenn die Montageführung (101e) mit der Modulführung (19) gekoppelt wird.

10. Kühlschrank nach Anspruch 7, wobei sich die Modulführung (19) und die Montageführung (101e) entlang der Richtung erstrecken, in der das Kühlmodul (100) in das Gehäuse (10) eingesetzt werden kann, um an dem Gehäuse (10) montiert zu werden.

11. Kühlschrank nach Anspruch 1, ferner umfassend Silikonöl, das auf das Dichtungselement (40) aufgetragen ist.

12. Kühlschrank nach Anspruch 1, wobei das Modulgehäuse umfasst:
einen Modulkörper, der einen Aufnahmeraum umfasst, in dem der Verdampfer (111) montiert ist; und
einen Modulisolator, der in dem Modulkörper vorgesehen ist, so dass der Aufnahmeraum von außen isoliert ist.

13. Kühlschrank nach Anspruch 12, wobei
das Modulgehäuse ferner eine Grundplatte umfasst, die unterhalb des Modulkörpers angeordnet ist und zusammen mit dem Modulkörper einen Maschinenraum bildet, und
der Kompressor (106) und der Kondensator (107) im Maschinenraum positioniert sind.

14. Kühlschrank nach Anspruch 12, wobei mindestens ein Abschnitt des Moduldichtungsabschnitts (102) außerhalb des Aufnahmeraums entlang eines Umfangs des Aufnahmeraums angeordnet ist.

## Revendications

1. Réfrigérateur, comprenant :
une armoire (10) formant une chambre de stockage (20a, 20b) dans celle-ci et comprenant une partie de montage de module de refroidissement (15) ;
une partie d'étanchéité d'armoire (15a) formée sur une surface extérieure de la partie de montage de module de refroidissement (15) ;
un module de refroidissement (100) monté de manière amovible sur la partie de montage de module de refroidissement (15) et comprenant un évaporateur (111), un condenseur (107) et un compresseur (106), dans lequel le module de refroidissement (100) comprend un boîtier de module, et le boîtier de module comprend une partie d'étanchéité de module (102) faisant face à la partie d'étanchéité d'armoire (15a), et
un élément d'étanchéité (40) placé entre la partie d'étanchéité d'armoire (15a) et la partie d'étanchéité de module (102),
**caractérisé en ce que** la partie d'étanchéité de module (102) comprend une partie inclinée qui est positionnée à une inclinaison par rapport à une direction dans laquelle le module de refroidissement (100) peut être inséré dans l'armoire (10) pour être monté sur l'armoire (10),
dans lequel la partie d'étanchéité d'armoire (15a) comprend une partie inclinée qui est inclinée pour correspondre à la partie inclinée de la partie d'étanchéité de module (102),
dans lequel l'élément d'étanchéité (40) comprend une partie inclinée qui est inclinée pour correspondre à la partie inclinée de la partie d'étanchéité de module (102) et à la partie inclinée de la partie d'étanchéité d'armoire (15a), la partie inclinée de l'élément d'étanchéité (40) étant en contact avec la partie inclinée correspondante de la partie d'étanchéité de module (102) et avec la partie inclinée correspondante de la partie d'étanchéité d'armoire (15a).

2. Réfrigérateur selon la revendication 1, dans lequel
la partie d'étanchéité d'armoire (15a) comprend une rainure en retrait,
la partie d'étanchéité de module (102) comprend une saillie qui fait saillie pour être insérée dans la partie d'étanchéité d'armoire (15a) lorsque le module de refroidissement (100) est inséré dans l'armoire pour être monté sur l'armoire (10) pour être monté sur l'armoire (10) et
l'élément d'étanchéité (40) est inséré dans la partie d'étanchéité d'armoire (15a) et pressé par la partie d'étanchéité de module (102) lorsque le module de refroidissement (100) est inséré dans l'armoire (10) pour être monté sur l'armoire (10).

3. Réfrigérateur selon la revendication 2, dans lequel une taille de la partie d'étanchéité d'armoire (15a) est plus grande qu'une taille de la partie d'étanchéité de module (102).

4. Réfrigérateur selon la revendication 1, dans lequel
la partie d'étanchéité de module (102) comprend une rainure en retrait,
la partie d'étanchéité d'armoire (15a) comprend une saillie faisant saillie pour être insérée dans la partie d'étanchéité de module (102) lorsque le module de refroidissement (100) est inséré dans l'armoire (10) pour être monté sur l'armoire (10), et
l'élément d'étanchéité (40) est inséré dans la partie d'étanchéité de module (102) et pressé par la partie d'étanchéité d'armoire (15a) lorsque le module de refroidissement (100) est inséré dans l'armoire pour être monté sur l'armoire (10).

5. Réfrigérateur selon la revendication 4, dans lequel une taille de la partie d'étanchéité de module (102) est plus grande qu'une taille de la partie d'étanchéité d'armoire (15a).

6. Réfrigérateur selon la revendication 1, dans lequel
l'armoire (10) comprend une ouverture de conduit faisant communiquer le module de refroidissement (100) avec la chambre de stockage (20a, 20b) pour recevoir de l'air froid du module de refroidissement (100), et
au moins une partie de l'élément d'étanchéité (40) s'étend le long d'une circonférence extérieure de l'ouverture de conduit.

7. Réfrigérateur selon la revendication 1, dans lequel
l'armoire (10) comprend un guide de module (19) pour guider un mouvement du module de refroidissement (100) lorsque le module de refroidissement (100) est inséré dans l'armoire (10) pour être monté sur l'armoire (10), et
le module de refroidissement (100) comprend un guide de montage (101e) qui est guidé par le guide de module (19) et monté sur le guide de module (19) lorsque le module de refroidissement (100) est inséré dans l'armoire (10) pour être monté sur l'armoire (10).

8. Réfrigérateur selon la revendication 7, dans lequel
le guide de montage (101e) fait saillie par rapport au boîtier de module, et
le guide de module (19) comporte une rainure permettant d'insérer le guide de montage (101e).

9. Réfrigérateur selon la revendication 7, dans lequel le module de refroidissement (100) comprend en outre un élément de fixation pour fixer le guide de montage (101e) au guide de module (19) lorsque le guide de montage (101e) est couplé au guide de module (19).

10. Réfrigérateur selon la revendication 7, dans lequel le guide de module (19) et le guide de montage (101e) s'étendent le long de la direction dans laquelle le module de refroidissement (100) peut être inséré dans l'armoire (10) pour être monté sur l'armoire (10).

11. Réfrigérateur selon la revendication 1, comprenant en outre de l'huile de silicone appliquée sur l'élément d'étanchéité (40).

12. Réfrigérateur selon la revendication 1, dans lequel le boîtier de module comprend :
un corps de module comprenant un espace de logement dans lequel l'évaporateur (111) est monté ; et
un isolateur de module placé dans le corps de module, de sorte que l'espace de logement est isolé de l'extérieur.

13. Réfrigérateur selon la revendication 12, dans lequel
le boîtier de module comprend en outre une plaque de base placée sous le corps de module et formant une salle des machines avec le corps de module, et
le compresseur (106) et le condenseur (107) sont placés dans la salle des machines.

14. Réfrigérateur selon la revendication 12, dans lequel au moins une partie de la partie d'étanchéité de module (102) est positionnée à l'extérieur de l'espace de logement le long d'une circonférence de l'espace de logement.
